Europäisches Patentamt

European Patent Office

Office européen des brevets

(11) Numéro de publication : **0 128 827**
**B1**

(12) **FASCICULE DE BREVET EUROPÉEN**

(45) Date de publication du fascicule du brevet :
09.09.87

(51) Int. Cl.⁴ : **G 01 T 7/04**

(21) Numéro de dépôt : **84401166.8**

(22) Date de dépôt : **06.06.84**

(54) Procédé de détection de la contamination atmosphérique par des aérosols de particules alpha et détecteur portatif de cette contamination mettant en oeuvre le procédé.

(30) Priorité : 10.06.83 FR 8309685

(43) Date de publication de la demande :
19.12.84 Bulletin 84/51

(45) Mention de la délivrance du brevet :
09.09.87 Bulletin 87/37

(84) Etats contractants désignés :
BE CH DE GB IT LI NL SE

(56) Documents cités :
EP-A- 0 079 079
FR-A- 2 456 331
US-A- 4 055 762
IEEE TRANS. NUCLEAR SCIENCE, volume NS-23, no.
3, juin 1976 (NEW YORK, US) H.F: SCHULTE: "Current
technology in sampling for airborne radionuclides",
pages 1197-1201
Le dossier contient des informations techniques présentées postérieurement au dépôt de la demande et
ne figurant pas dans le présent fascicule.

(73) Titulaire : **COMMISSARIAT A L'ENERGIE ATOMIQUE
Etablissement de Caractère Scientifique Technique
et Industriel
31/33, rue de la Fédération
F-75015 Paris (FR)**

(72) Inventeur : **Burghoffer, Patrick
4, rue du Parc
F-77200 Lognes (FR)**
Inventeur : **Charuau, Jean
13, Allée du Bois de la Cyprenne
F-91400 Orsay (FR)**
Inventeur : **Merelli, Marc
22, Allée de la Natée
F-91190 Gif-sur-Yvette (FR)**
Inventeur : **Prigent, Raymond
La Ronce
F-91460 Marcoussis (FR)**

(74) Mandataire : **Mongrédien, André et al
c/o BREVATOME 25, rue de Ponthieu
F-75008 Paris (FR)**

## Description

La présente invention a trait au domaine de la détection des aérosols de particules alpha contenues dans l'atmosphère et notamment à la surveillance des laboratoires où travaille du personnel maniant du plutonium ou des corps transuraniens émetteurs de rayonnement alpha.

D'une façon générale, il est bien connu que la mesure de la contamination atmosphérique par des aérosols de particules alpha, se heurte toujours au problème du bruit de fond ambiant dû à la présence de radon et de ses descendants qui sont normalement présents dans l'atmosphère et également émetteurs alpha. Si, par conséquent, on recueille pour les analyser de façon globale toutes les particules émettrices alpha, on obtient un résultat faussé et qui ne donne pas une image correcte des dangers réellement encourus par une personne qui respire l'atmosphère analysée. En effet, alors que les particules alpha dues au radon et à ses descendants dans l'ambiance naturelle sont normalement inhalées par l'être humain sans conséquences physiologiques sérieuses, le plutonium 239 et les transuraniens, sont des corps très toxiques et à durée de décroissance très longue, c'est-à-dire, par définition très dangereux lorsqu'ils viennent à être inhalés et à se fixer sur des organes du corps humain.

C'est la raison pour laquelle on a cherché jusqu'à maintenant à séparer dans les signaux de contamination alpha, ceux qui sont dus au bruit de fond des descendants du radon, de ceux qui sont dus à une pollution chimique accidentelle. Deux méthodes ont été utilisées jusqu'à ce jour à cet effet, mais elles présentent des inconvénients qui les rendent difficilement applicables.

La première de ces méthodes consiste à recourir à la spectrométrie alpha, c'est-à-dire à trier les particules alpha en fonction de leur longueur d'onde. Ce traitement nécessite un matériel relativement lourd et cher et de toute façon le traitement physique et électronique nécessaire dure un temps qui peut, dans certains cas d'urgence, représenter un retard inacceptable.

La seconde méthode consiste à effectuer cette séparation en étudiant les temps de décroissance radioactifs des différentes particules alpha, ce qui permet une bonne séparation de ceux émis par les descendants du radon mais le dépouillement des résultats est encore plus long et demande un délai de l'ordre d'une journée, ce qui est nettement prohibitif si l'on veut assurer dans un laboratoire une surveillance rapide et de tous les instants de la qualité de l'air inhalé par le personnel.

Enfin, les deux méthodes précédentes mettent en œuvre des appareillages électroniques relativement complexes et coûteux, ce qui exclut totalement la possibilité de réaliser un appareil de détection qui soit autonome et portatif par chacun des individus travaillant dans le laboratoire.

La présente invention a précisément pour objet un procédé de détection de la contamination atmosphérique par des aérosols alpha qui permet de pallier les inconvénients précédents et de réaliser des appareils de détection portatifs autonomes en effectuant la séparation du bruit de fond dû aux descendants du radon par des moyens uniquement mécaniques et statiques.

A cet effet, l'invention a pour objet un procédé de détection de la contamination atmosphérique par des aérosols de particules alpha, ledit procédé éliminant le bruit de fond dû aux descendants du radon et consistant à recueillir par circulation de l'air atmosphérique les particules alpha à détecter sur un filtre placé devant un système de détection et de comptage. Il se caractérise en ce que l'on effectue la discrimination entre les particules alpha présentes dans l'atmosphère et provenant d'une source polluante que l'on veut détecter et compter et les particules alpha constituant le bruit de fond et normalement présentes dans l'atmosphère, à partir de leurs différentes granulométries.

L'efficacité du procédé objet de l'invention résulte des considérations suivantes concernant la granulométrie des particules émettrices alpha. Dans l'atmosphère généralement filtrée d'un laboratoire où l'on traite des corps transuraniens, l'expérience montre que les particules émettrices alpha de tels transuraniens ont une granulométrie comprise entre 1 et 10 $\mu$m et que de toute façon les particules plus grosses sont inintéressantes car elles sont relativement difficilement inhalables et ne pénètrent pas dans l'organisme. Au contraire, les particules alpha dues au bruit de fond atmosphérique et aux descendants du radon comportent elles mêmes deux fractions dont les granulométries sont très inférieures aux limites précédentes et qui se répartissent comme suit :

les descendants du radon qui sont libres, c'est-à-dire non fixés sur des particules fines naturelles ont une granulométrie ultra fine comprise généralement entre $6 \cdot 10^{-4}$ et $2 \cdot 10^{-3}$ micromètre ;

l'autre partie de ces mêmes descendants du radon est fixée sur des particules fines naturelles dont la granulométrie moyenne est alors comprise généralement entre 0,1 et 0,2 micromètre.

Les résultats de l'analyse précédente montrent par conséquent qu'il est possible d'effectuer la discrimination entre les deux types d'émetteur alpha présents dans l'atmosphère uniquement à partir de leurs différences de granulométrie. Ceci a pour avantage considérable que cette discrimination peut alors être faite par des moyens purement mécaniques et statiques, donc simples, fiables et peu coûteux, que l'on peut aménager sans difficulté sur un appareil autonome et portable de petites dimensions.

De façon plus précise et selon une réalisation préférée, le procédé de détection de la contamination atmosphérique alpha, objet de l'invention, se caractérise en ce que la discrimination est réalisée en deux temps, à savoir :

une élimination de la fraction libre des particules alpha descendant du radon par passage de l'air atmosphérique à surveiller dans un espace limité par deux parois parallèles assurant le piègeage par impact de cette fraction avant l'arrivée de cet air sur le filtre ;

une élimination de la fraction des particules alpha descendant du radon fixée sur les particules fines naturelles par passage de l'air atmosphérique au travers dudit filtre, ce dernier comportant des pores capillaires qui laissent passer les particules de granulométrie inférieure au micromètre et jusqu'à environ $5 \cdot 10^{-2}$ micromètre.

Conformément à l'invention, on piège par conséquent entre deux parois parallèles, la fraction libre des descendants du radon conformément à l'effet physique connu de piégeage par diffusion moléculaire. Les caractéristiques (épaisseur, nature des parois, débit d'air) de la structure de piégeage sont suffisamment connues de l'homme de l'art pour que les différents paramètres puissent être choisis en vue de piéger les descendants libres du radon dont on connaît la granulométrie ultrafine.

Quant aux particules fines naturelles, supportant des descendants du radon émetteurs alpha, on les élimine en choisissant la dimension des pores du filtre microporeux sur lequel sont recueillis par conséquent les particules à détecter et à mesurer, dont la granulométrie est comprise entre 1 et 10 micromètres.

Bien entendu, et conformément à l'invention, le débit d'aspiration et les paramètres du circuit d'aspiration (forme, dimension...) sont choisis de telle sorte que les particules à mesurer ne puissent pas être retenues avant le filtre. Autrement dit, l'homme de l'art connaissant les propriétés de diffusion moléculaire, choisit les paramètres du circuit d'aspiration pour éviter toute sédimentation des particules utiles sous l'action de la pesanteur, pour éviter également le piégeage par impact sous l'action de la force centrifuge ou les dépôts qui pourraient se produire à la suite de turbulences intervenant dans l'écoulement.

L'analyse granulométrique des aérosols alpha en présence (ceux que l'on désire mesurer parce qu'ils sont dangereux et les parasites descendants du radon non dangereux) ayant conduit au choix d'une méthode de discrimination physique entre ces deux catégories utilisant le critère de granulométrie, il n'était pas évident que des processus purement physiques permettent une telle séparation sans que l'on perde des particules utiles à mesurer avant leur arrivée sur le filtre. Le demandeur a trouvé après une étude approfondie que la combinaison des deux processus d'élimination des aérosols parasites précédemment décrits était compatible et a pu démontrer, au niveau de l'espace de diffusion, qu'il était possible de satisfaire les impératifs d'écoulement sans perte de particules à mesurer, tout en réalisant une capture des particules parasites ultra-fines à l'entrée du système. Par ailleurs, on peut remarquer que la combinaison des deux moyens utilisés pour l'élimination est absolument indispensable car le filtre microporeux à lui seul est incapable d'éliminer la fraction libre des descendants du radon en ne retenant que les particules utiles à mesurer. En effet, les pores d'un tel filtre capteraient, par diffusion, les particules ultra-fines avec un rendement de collection de l'ordre de 80 % pour une granulométrie de $10^{-2}$ micromètre et de l'ordre de 100 % dès que l'on atteindrait $10^{-3}$ micromètre. Ceci confirme bien le caractère non évident du résultat obtenu et la nécessité, pour obtenir cette élimination physique de recourir, à l'aide de deux moyens associés en combinaison.

La présente invention a également pour objet un détecteur portatif de la contamination atmosphérique par des aérosols de particules alpha, qui met en œuvre le procédé précédent de façon particulièrement simple.

Ce détecteur portatif de la contamination atmosphérique par des aérosols de particules alpha mettant en œuvre le procédé est du genre de ceux qui comprennent dans un boîtier autonome une tête d'aspiration de l'air atmosphérique à surveiller, des moyens pour mettre en circulation cet air au travers d'un filtre microporeux, un ensemble électronique de détection et de comptage des particules retenues sur le filtre et une source d'énergie électrique. Il se caractérise en ce que la tête d'aspiration est de forme générale sphérique, l'aspiration de l'air atmosphérique et son acheminement vers le filtre se faisant dans un espace délimitant une lame d'air comprise entre deux surfaces sphériques concentriques, la surface sphérique externe étant ouverte selon un orifice d'aspiration dans lequel vient se loger une partie déflectrice de la sphère interne sous-jacente dont le profil est choisi pour minimiser la perte de particules à détecter par piégeage par impact sur les parois internes dudit espace, le filtre à pores capillaires traversé ensuite par le flux d'air à surveiller ayant une porosité choisie pour ne retenir que les particules de granulométrie supérieure au micromètre.

De préférence, le détecteur est associé à une alarme, sonore ou autre, avertissant le porteur d'un taux anormal de contamination radioactive avoisinante.

Des calculs d'optimisation effectués sur le détecteur objet de l'invention ont montré qu'une version optimale de l'appareil sous sa forme portable correspondait à une réalisation dans laquelle le diamètre moyen de la lame d'air comprise entre les deux sphères est de 50 mm, l'épaisseur de la lame d'air de 1,5 mm, le rayon de courbure du sommet de la partie déflectrice de la sphère interne de 5 mm, le débit d'aspiration de l'air de 3 litres par minute et la distance entre le filtre et la surface sensible du détecteur de l'ordre de 3 mm.

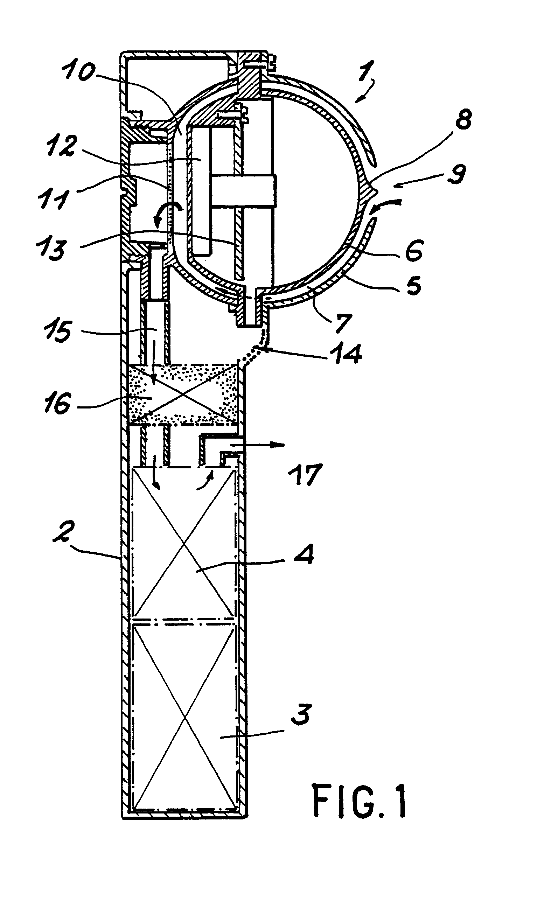

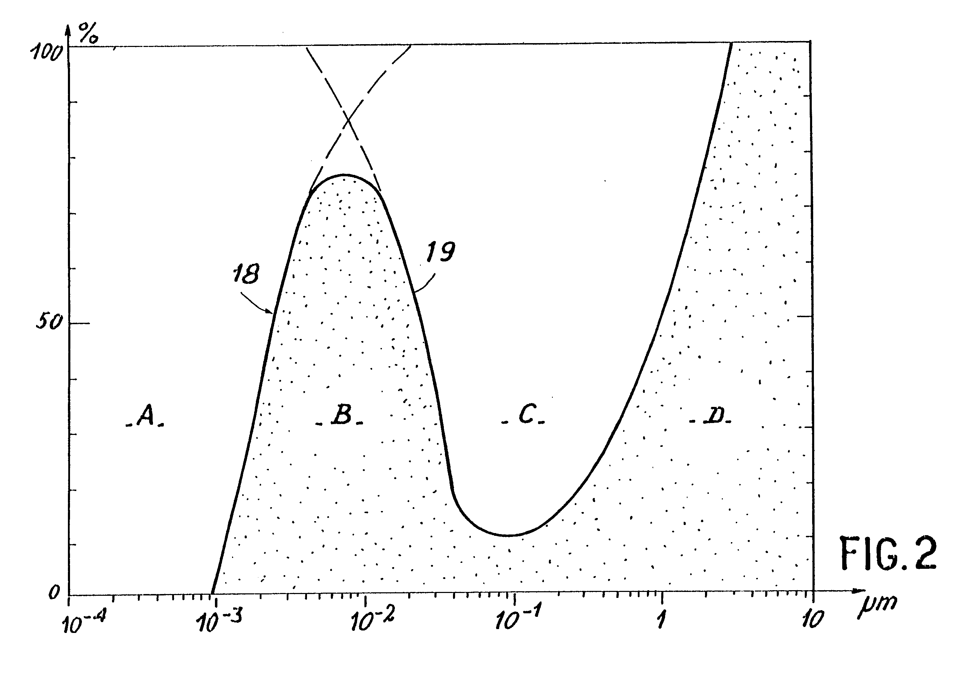

De toute façon, l'invention sera mieux comprise en se référant à la description qui suit d'un exemple de mise en œuvre du détecteur portatif de la contamination atmosphérique par des aérosols de particules alpha et en se référant aux figures 1 et 2, sur lesquelles :

la figure 1   montre en coupe le schéma général de l'appareil ;

la figure 2   représente la courbe de discrimination des particules en fonction de leur granulométrie.

L'appareil décrit sur la fig. 1 comporte de façon connue une tête d'aspiration 1 montée sur un boîtier 2, ledit boîtier comportant une batterie électrique 3 et une minipompe 4, destinée à mettre en circulation l'air atmosphérique prélevé dans le local à surveiller. La minipompe 4, d'un type quelconque connu, n'a pas été représentée sur le dessin, mais simplement localisée.

Conformément à l'invention, l'aspiration de l'air atmosphérique à surveiller est réalisée à l'aide d'un ensemble de deux sphères concentriques 5 et 6 définissant entre elles un espace 7 de circulation de l'air. La sphère externe 5 se termine sur la face avant de l'appareil par un orifice d'aspiration 9 ouvert sur l'extérieur et dans lequel vient se loger une partie déflectrice 8 par laquelle se termine la partie de la sphère interne 6 située devant l'orifice d'aspiration 9. L'air prélevé par l'orifice d'aspiration 9 se déplace sous l'effet de la dépression créée par la minipompe 4 dans l'espace 7 intermédiaire entre les sphères 5 et 6 et pénètre ainsi jusqu'à la chambre inférieure 10 située à l'arrière de la tête d'aspiration 1.

De part et d'autre de cette chambre inférieure 10, se trouvent situés respectivement un filtre microporeux 11 et un détecteur de rayonnement 12 constitué, dans l'exemple décrit, par une diode à barrière de surface. Derrière le détecteur 12 se trouve situé le circuit électronique 13, d'un type en soi connu, qui transforme les impulsions détectées en impulsions électriques à une fréquence caractéristique de l'intensité du rayonnement alpha détecté, cette fréquence étant retransmise, par un élément sonore 14, sous forme d'un signal de fréquence variable, au porteur de l'appareil. Après passage au travers du filtre microporeux 11, l'air atmosphérique capté s'écoule par la canalisation 15 au travers d'un filtre absolu 16 qui retient toutes les poussières ou impuretés pour être finalement rejeté à l'extérieur en 17 selon le trajet marqué par les flèches sur le dessin.

L'originalité de l'invention réside uniquement, comme on l'a déjà compris de par la description qui précède, de la conception de la tête d'aspiration 1, laquelle réalise les deux éliminations successives des sources de rayonnement alpha provenant des descendants du radon.

A cet effet, dans un mode de mise en œuvre particulièrement intéressant du détecteur portatif objet de l'invention, ce dernier a été optimisé afin d'entraîner un minimum d'inconvénients pour son porteur ; c'est ainsi notamment que l'on a soigneusement calculé l'encombrement et le poids de l'appareil et de la batterie 3 (450 g environ). Pour minimiser la consommation électrique et le bruit de la pompe 4, on a limité volontairement le débit d'aspiration à la valeur moyenne de 3 litres par minute qui correspond à une norme généralement acceptée dans les laboratoires pour de tels détecteurs portatifs.

L'ensemble sphérique constituant la tête d'aspiration 1 a un diamètre extérieur de 55 mm ; elle est montée sur un boîtier 2 de forme parallélépipédique en matière plastique et c'est ce dernier qui renferme le filtre absolu 16 pour protéger la minipompe 4 qui se trouve en aval. La diode à barrière de surface a un diamètre sensible voisin de 24 mm.

L'épaisseur de la lame d'air 7 comprise entre les sphères 5 et 6 a été choisie égale à 1,5 mm ; les rayons de courbure de la pointe de la partie déflectrice 8 et de la chambre inférieure 10 ont été choisis égaux respectivement à 5 mm et 13 mm ; le diamètre moyen de la lame d'air 7 a été choisi égal à 50 mm et la distance entre le filtre 11 de diamètre utile 21 mm et la surface sensible du détecteur 12 est égale à 3 mm.

Toutes ces caractéristiques ainsi optimisées permettent d'obtenir, par des moyens purement mécaniques et statiques, un certain nombre de résultats remarquables et notamment la réduction maximale de la perte des particules de grosse granulométrie sur les parois, une inertie relativement faible de ces mêmes grosses particules à l'entrée de l'appareil pour éviter leur piégeage par impact sur la partie déflectrice 8 ; également, afin de rendre minimale la précipitation électrostatique des particules chargées sur les parois de l'espace 7, celles-ci sont métalliques ou métallisées.

Les particules ultra-fines des descendants solides du radon non fixées sur les particules fines naturelles sont en général électriquement positives ou neutres. Compte tenu de leur petite taille, ces particules ont une mobilité très grande et diffusent rapidement, ce qui permet de les piéger complètement dans les parois de l'espace 7 d'écoulement d'air de la tête de prélèvement 1.

Enfin, un moyen simple de séparer le spectre granulométrique et de rejeter les particules fines naturelles de moyennes dimensions (0,1 à 0,2 μ) sur lesquelles se sont fixées une partie des descendants solides du radon, consiste, pour ne conserver sur le filtre que la fraction des particules de granulométrie supérieure à 1 μm, à utiliser un filtre à pores capillaires de prélèvement 11. Il s'agit pour le filtre microporeux 11 d'une membrane en polycarbonate d'épaisseur 10 μm. L'étude de l'efficacité de collection du filtre 11 en fonction du diamètre aérodynamique des particules a montré que la membrane avait une efficacité optimale lorsque la porosité était de 3 μm.

Le détecteur portatif, objet de l'invention, permet ainsi d'assurer la détection individuelle de la contamination atmosphérique en aérosols alpha en aspirant, à l'aide d'une petite pompe 4, un débit de 3 litres par minute, la tête d'aspiration 1 de l'appareil permettant :

de capter les aérosols jusqu'à 10 μm avec un rendement voisin de 100 % ;

de piéger sur ses parois les particules ultra-fines (de $6 \cdot 10^{-4}$ à $2 \cdot 10^{-3}$ μm) qui constituent la fraction libre des descendants du radon ;

de conduire sans pertes importantes (inférieures de toute façon à 7 %) les particules les plus

grosses (10 μm) jusqu'au filtre de prélèvement 11 sur lequel elles se répartissent de manière homogène ;

de séparer les particules submicroniques qui traversent la membrane 11 à pores capillaires des grosses particules qui sont seules retenues ;

de mesurer l'activité alpha de ces grosses particules à l'aide d'un détecteur 12 dont la surface sensible, légèrement supérieure à celle du filtre 11, en est éloignée de 3 mm environ.

L'étude de l'appareil montre qu'il permet l'élimination de la quasi-totalité (98 % en théorie) de la fraction libre des descendants solides du radon et d'environ 88 % de ceux qui sont fixés sur les particules submicroniques. Dans ces conditions, le bruit de fond dû au radon et à ses descendants normalement présents dans l'atmosphère diminue d'un facteur 10 à 20 environ par rapport à ce qu'il est quand on mesure l'activité alpha sans précaution.

C'est ce qui apparaît sur la courbe de la fig. 2 qui montre le pourcentage des particules collectées par le filtre 11 en fonction de leur diamètre, ou de leur diamètre aérodynamique équivalent (densité 1) pour les particules de diamètre supérieur à 1 micromètre, ce diamètre étant exprimé en micromètre.

Sur cette fig. 2, on distingue la courbe 18 montrant le piégeage des particules ultra-fines par l'espace 7 et la courbe 19 montrant l'effet du filtre 11.

Ces courbes 18 et 19 délimitent les espaces A, B, C, D correspondant respectivement :

pour l'espace A aux particules ultra-fines comprenant la fraction libre du radon et piégées par l'espace 7 ;

pour l'espace B à des particules de taille intermédiaire non porteuses de radon et partiellement collectées par le filtre 11 ;

pour l'espace C à des particules fines porteuses de radon et traversant le filtre 11 ;

pour l'espace D, aux particules à mesurer collectées par le filtre 11.

Enfin, la petite taille de la tête d'aspiration 1 réalisée en duralinox (diamètre 55 mm) et le poids relativement faible du prototype (450 g tous accessoires compris), permettent de réaliser un appareil individuel et portatif répondant parfaitement au critère d'efficacité demandé.

**Revendications**

1. Procédé de détection de la contamination atmosphérique par des aérosols de particules alpha, ledit procédé éliminant le bruit de fond dû aux descendants du radon et consistant à recueillir par circulation de l'air atmosphérique les particules alpha à détecter sur un filtre (11) placé devant un système de détection et de comptage (12, 13, 14), caractérisé en ce que l'on effectue la discrimination entre les particules alpha présentes dans l'atmosphère et provenant d'une source polluante que l'on veut détecter et compter et les particules alpha constituant le bruit de fond et normalement présentes dans l'atmosphère, à partir de leurs différentes granulométries.

2. Procédé de détection de la contamination atmosphérique alpha selon la revendication 1, caractérisé en ce que la discrimination est réalisée en deux temps, à savoir :

une élimination de la fraction libre des particules alpha descendant du radon par passage de l'air atmosphérique à surveiller dans un espace (7) limité par deux parois parallèles (5, 6) assurant le piégeage par impact de cette fraction avant l'arrivée de cet air sur le filtre (11) ;

une élimination de la fraction des particules alpha descendant du radon fixée sur les particules fines naturelles, par passage de l'air atmosphérique au travers dudit filtre (11), ce dernier comportant des pores capillaires (11) qui laissent passer les particules de granulométrie inférieure au micromètre et jusqu'à environ $5 \cdot 10^{-2}$ micromètre.

3. Détecteur portatif de la contamination atmosphérique par des aérosols de particules alpha mettant en œuvre le procédé selon l'une quelconque des revendications 1 et 2 précédentes, du genre de ceux qui comprennant dans un boîtier (2) autonome une tête d'aspiration (1) de l'air atmosphérique à surveiller, des moyens pour mettre en circulation cet air au travers d'un filtre (11) microporeux, un ensemble électronique (12, 13, 14) de détection et de comptage des particules retenues sur le filtre (11) et une source (3) d'énergie électrique, caractérisé en ce que la tête d'aspiration (1) est de forme générale sphérique, l'aspiration de l'air atmosphérique et son acheminement vers le filtre (11) se faisant dans un espace (7) délimitant une lame d'air comprise entre deux surfaces sphériques concentriques (5, 6), la surface sphérique externe (5) étant ouverte selon un orifice d'aspiration (9) dans lequel vient se loger une partie déflectrice (8) de la sphère interne sous-jacente (6) dont le profil est choisi pour minimiser la perte de particules à détecter par piégeage par impact sur les parois internes dudit espace (7), le filtre à pores capillaires (11) traversé ensuite par le flux d'air à surveiller ayant une porosité choisie pour ne retenir que les particules de granulométrie supérieure au micromètre.

4. Détecteur portatif selon la revendication 3, caractérisé en ce que le diamètre moyen de la lame d'air (7) comprise entre les deux sphères est de 50 mm, l'épaisseur de cette lame d'air de 1,5 mm, le rayon de courbure du sommet de la partie déflectrice (8) de la sphère interne (6) de 5 mm, le débit d'aspiration de l'air de 3 litres par minute et la distance entre le filtre (11) et la surface sensible du détecteur (12) de l'ordre de 3 mm.

5. Application du détecteur portatif selon l'une quelconque des revendications 1 à 4, à la réalisation d'un moniteur de contamination, caractérisée en ce que ledit moniteur comporte une alarme sonore (14).

## Claims

1. Process for the detection of atmospheric contamination by alpha particle aerosols, the said process removing the background noise due to the daughter products of radon and consisting in collecting, by means of circulation of atmospheric air, the alpha particles to be detected on a filter (11) placed in front of a detection and counting system (12, 13, 14), characterized in that discrimination is made between the alpha particles present in the atmosphere and originating from a contaminating source, which it is intended to detect and count, and the alpha particles forming the background noise and normally present in the atmosphere, on the basis of their different particle sizes.

2. Process for the detection of atmospheric alpha contamination according to Claim 1, characterized in that the discrimination is produced in two stages, namely :

removal of the free fraction of the alpha particles descended from radon, by passing the atmospheric air to be monitored through a space (7) bounded by two parallel walls (5, 6) ensuring the trapping of this fraction by impact before this air reaches the filter (11) ; and

removal of the fraction of the alpha particles descended from radon and which is fixed on the natural fine particles, by passing atmospheric air through the said filter (11), the latter comprising capillary pores (11) which let pass the particles of particle size below one micrometre and down to approximately $5 \cdot 10^{-2}$ micrometre.

3. Portable detector of atmospheric contamination by alpha particle aerosols, employing the process according to either of the preceding Claims 1 and 2, of the type of those which comprise, in a self-contained casing (2), a suction head (1) for the atmospheric air to be monitored, means for circulating this air through a microporous filter (11), an electronic assembly (12, 13, 14) for detecting and counting the particles retained on the filter (11) and a source (3) of electrical energy, characterized in that the suction head (1) is of overall spherical shape, the intake of atmospheric air and its flow towards the filter (11) taking place in a space (7) defining a sheet of air included between two concentric spherical surfaces (5, 6), the outer spherical surface (5) being open according to a suction orifice (9) in which there is housed a deflecting part (8) of the underlying inner sphere (6) whose profile is chosen so as to minimize the loss of the particles to be detected by impact trapping on the inner walls of the said space (7), the capillary-pore filter (11) through which the stream of air to be monitored then passes having a porosity chosen so that it retains only the particles of particle size above one micrometre.

4. Portable detector according to Claim 3, characterized in that the mean diameter of the sheet of air (7) included between the two spheres is 50 mm, the thickness of this sheet of air is 1.5 mm, the radius of curvature of the top of the deflecting part (8) of the inner sphere (6) is 5 mm, the rate of intake of air is 3 litres per minute and the distance between the filter (11) at the sensitive surface of the detector (12) is of the order of 3 mm.

5. Application of the portable detector according to any one of Claims 1 to 4, in the construction of a contamination monitor, characterized in that the said monitor comprises a sound-alarm (14).

## Patentansprüche

1. Verfahren zum Erfassen der atmosphärischen Verunreinigung durch Alphateilchen-Aerosole, wobei das Verfahren den von Folgeprodukten des Radons herrührenden Untergrund entfernt und darin besteht, durch Atmosphärenluftströmung die zu erfassenden Alphateilchen auf einem Filter (11) zusammeln. welches vor einem Erfassungsund Zählsystem (12, 13, 14) angeordnet ist, dadurch gekennzeichnet, daß man die Unterscheidung zwischen den Alphateilchen, die in der Atmosphäre vorhanden sind und von einer Verunreinigungsquelle herkommen, die man erfassen und zählen will, und den Alphateilchen, die den Untergrund bilden und normalerweise in der Atmosphäre vorhanden sind, aufgrund ihrer unterschiedlichen Granulometrie durchführt.

2. Verfahren zum Erfassen der atmosphärischen Verunreinigung mit Alphateilchen nach Anspruch 1, dadurch gekennzeichnet, daß die Unterscheidung in zwei Schritten durchgeführt wird, nämlich :

eine Aussonderung des freien Teils der Alphateilchen, die Folgeprodukte des Radons sind, indem man die zu überwachende Atmosphärenluft durch einen Raum (7) hindurchtreten läßt, der von zwei parallelen Wänden (5, 6) begrenzt ist, die das Abscheiden durch Stoß dieses Teils vor dem Eintreffen dieser Luft auf dem Filter sicherstellen ;

eine Aussonderung des Teils von Alphateilchen, die von dem Radon herkommen, welches an feinen, natürlichen Teilchen angelagert ist, indem man die Atmosphärenluft durch das Filter (11) treten läßt, wobei dieses kapillare Poren (11) aufweist, die Teilchen mit einer Granulometrie von weniger als einem Mikrometer und bis zu ungefähr $5 \cdot 10^{-2}$ Mikrometer hindurchgehen lassen.

3. Tragbare Erfassungseinrichtung für die atmosphärische Verunreinigung durch Alphateilchen-Aerosole zur Durchführung des Verfahrens nach Anspruch 1 oder 2, die in einem in sich selbst abgeschlossenen Gehäuse (2) einen Ansaugkopf (1) für die zu überwachende Atmosphärenluft, Mittel, um diese Luft durch ein Mikroporenfilter (11) hindurchströmen zu lassen, eine elektronische Gesamtheit (12, 13, 14) zum Erfassen und Zählen der auf dem Filter (11) zurückgehaltenen Teilchen und eine elektrische Energiequelle (3) aufweist, dadurch gekennzeichnet, daß der Ansaugkopf (1) allgemein kugelförmig ist, das Ansaugen der Atmosphärenluft und ihr Weg zu dem Filter (11) in einem Raum (7) erfolgt, der eine dünne Luftschicht begrenzt, die zwischen zwei konzentrischen Kugeloberflächen (5, 6) eingefaßt ist, daß die äußere Kugeloberfläche (5) zu einer Ansaugöffnung (9) hin offen ist, die ein Ablenkteil (8) der inneren, darunterliegenden Kugel (6) aufnimmt, dessen Profil ausgewählt ist, um den Verlust der zu erfassenden Teilchen durch Abtrennen durch Stoß auf den Innenwandungen des Raums (7) zu minimieren, und daß das darauffolgend von der zu überwachenden Luftströmung durchquerte Filter (11) mit kapillaren Poren eine derart gewählter Porosität aufweist, um nur die Teilchen mit einer Granulometrie oberhalb eines Mikrometers zurückzuhalten.

4. Tragbare Erfassungseinrichtung nach Anspruch 3, dadurch gekennzeichnet, daß der mittlere Durchmesser der Luftschicht (7) zwischen den zwei Kugeln 50 mm, die Dicke dieser Luftschicht 1,5 mm, der Krümmungsradius der Spitze des Ablenkteils (8) der inneren Kugel (6) 5 mm, die Luftansaugmenge 3 Liter pro Minute und der Abstand zwischen dem Filter (11) und der empfindlichen Oberfläche der Erfassungseinrichtung (12) größenordnungsmäßig 3 mm beträgt.

5. Verwendung der tragbaren Erfassungseinrichtung nach einem der Ansprüche 1 bis 4, zur Bildung eines Verschmutzungsmonitors, dadurch gekennzeichnet, daß der Monitor eine hörbare Signaleinrichtung (14) aufweist.

FIG.1

FIG.2

0 128 827